# EUROPÄISCHE PATENTSCHRIFT

(11) **EP 1 472 766 B1**
(45) Veröffentlichungstag und Bekanntmachung des Hinweises auf die Patenterteilung: **23.11.2005**
(21) Anmeldenummer: 03737259.6
(22) Anmeldetag: 18.01.2003
(51) Int. Cl.: H02B 1/20

(54) **ANSCHLUSS- ODER VERTEILVORRICHTUNG FÜR ELEKTRISCHE INSTALLATIONSGERÄTE**
CONNECTING OR DISTRIBUTING DEVICE FOR ELECTRICAL INSTALLATION EQUIPMENT
DISPOSITIF DE RACCORDEMENT OU DE DISTRIBUTION POUR APPAREILS ELECTRIQUES D'INSTALLATION

(30) Priorität: 07.02.2002 DE 10204934
(43) Veröffentlichungstag der Anmeldung: 03.11.2004
(73) Patentinhaber: ABB PATENT GmbH, 68526 Ladenburg (DE)
(72) Erfinder: EPPE, Klaus-Peter, 69429 Waldbrunn (DE); ORBAN, Alexander, 69469 Weinheim (DE)
(74) Vertreter: Miller, Toivo
(86) Internationale Anmeldenummer: PCT/EP2003/000465
(87) Internationale Veröffentlichungsnummer: WO 2003/067725

(56) Entgegenhaltungen:
- EP-A- 0 651 481
- EP-A- 1 003 258

## Beschreibung

Die Erfindung betrifft eine in eine Installationsanlage, vorzugsweise einen Hausverteilerkasten einbaubare Anschlußvorrichtung oder Verteilvorrichtung für elektrische Installationsgeräte gemäß dem Oberbegriff des Anspruches 1 (siehe EP-A-1003258).

Als Elektroinstallationsgeräte werden Leitungsschutzschalter, Fehlerstromschutzschalter, Energiemodule oder ähnliche Installationsgeräte bezeichnet. Die Firma ABB Stotz-Kontakt GmbH, Heidelberg, produziert und vertreibt unter dem Produktnamen "System Connect" solche Anschluß- und Verteilvorrichtungen. Diese sind beispielsweise in dem Produktkatalog "Niederspannungsmaterial" der ABB Stotz-Kontakt /Striebel & John Vertriebsgesellschaft mbH aus dem Jahr 2000 beschrieben. Bei diesen sind im Hausverteilerkasten die Sammelschienen in einem Basisgehäuse untergebracht, an dem eine Normprofilschiene, vorzugsweise eine Hutprofilschiene angebracht ist, welche zur Aufnahme der Elektroinstallationsgeräte dient und den über Energiemodule eingespeisten Strom über die Sammelschienen an die einzelnen Elektroinstallationsgeräte weiterleitet. Insbesondere sind Systeme bekannt, bei denen in einem Hausverteilerkasten mehr als ein solches Basisgehäuse angebracht sind. Dabei wird der Strom von einer zur nächsten Sammelschiene mittels Leitungsverbinder weitergeleitet. Bei dem bekannten System Connect erfolgt die Verbindung der Sammelschienen mit an den Schmal- oder Stimseiten des Basisgehäuses befindlichen Steckkontakten, in die der Leitungsverbinder in horizontaler Richtung hineingesteckt wird. Die Gesamteinbaubreite des Basisgehäuses erhöht sich dabei um die Breite des Leitungsverbinders, da der Leitungsverbinder seitlich neben dem Basisgehäuse entlang geführt ist. Außerdem ist ein nachträglicher Einbau oder Austausch des Leitungsverbinders im fertig montierten Verteilerkasten aufgrund der Platzverhältnisse bei diesem seitlichen Anbringen nicht möglich ist.

Aufgabe der Erfindung ist es, eine Anschluß- oder Verteilvorrichtung für elektrische Installationsgeräte der eingangs genannten Art zu schaffen, bei der die Nachteile der bekannten Vorrichtungen vermieden werden.

Diese Aufgabe wird erfindungsgemäß durch die kennzeichnenden Merkmale des Anspruches 1 gelöst.

Erfindungsgemäß verläuft der Leitungsverbinder in dem Zwischenraum zwischen Basisgehäuse und Rückwand des Hausverteilerkastens. An beiden Enden des Leitungsverbinders sind Anschlußkontaktstücke vorgesehen, und an der Sammelschiene sind an geeigneter Stelle Gegenkontaktstücke vorgesehen, die mit den Anschlußkontaktstücken des Leitungsverbinders in Eingriff bringbar sind.

Der Leitungsverbinder kann dabei als Phasenschienenblock mit einer oder mehreren gegeneinander isolierten und in ihrer Längserstreckungsrichtung parallel zueinander angeordneten Phasenschienen ausgebildet sein.

Vorteil dieser Anordnung ist, daß die Einbaubreite des Basisgehäuses in den Hausverteilerkasten durch den Leitungsverbinder nun nicht mehr vergrößert wird.

In einer besonders vorteilhaften Ausgestaltung der Erfindung sind die an der Sammelschiene vorgesehenen Gegenkontaktstücke als an der Oberkante des Basisgehäuses angebrachte Steckbuchsen ausgeführt. Das Einführen der Anschlußstücke in die Gegenkontaktstücke erfolgt dabei vorteilhafterweise in vertikaler Richtung.

Gemäß einer weiteren Ausgestaltung der Erfindung besitzt jede Phasenschiene an ihrem oberen und unteren Ende L-förmige Anformungen, deren freie Schenkel als Anschlußkontaktstücke dienen, in einer gemeinsamen Linie parallel zur Längserstreckung der Phasenschiene liegen und in die gleiche Richtung zeigen. Die festen Schenkel der L-förmigen Anformungen verlaufen quer zur Längserstreckung der Phasenschiene.

Durch diese Ausgestaltung wird bewirkt, daß die Verbindungsebene der Leitungsverbinder versetzt zur Steckebene der Anschlußkontaktstücke verläuft. Dies ermöglicht ein besonders einfaches auch nachträgliches Einbauen oder Austauschen des Leitungsverbinders im fertig montierten Hausverteilerkasten.

Damit beim Einstecken der Anschlußkontaktstücke in die Steckbuchsen keine zu hohe Steckkraft aufgewendet werden muß, können gemäß einer weiteren vorteilhaften Ausgestaltung der Erfindung die freien Endkanten der Anschlußstücke mit Einführschrägen versehen sein. Die Montage der Anschluß- und Verteilvorrichtung wird dadurch erheblich erleichtert.

Weitere vorteilhafte Ausgestaltungen und Verbesserungen der Erfindung sind den weiteren Unteransprüchen zu entnehmen.

Anhand der Zeichnungen, in denen einige Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Fig 1: eine perspektivische Ansicht eines Hausverteilerkastens mit darin eingebauter Verteilvorrichtung,
- Fig 2: die Vorderansicht einer erfindungsgemäßen Ausführungsform des Leitungsverbinders,
- Fig 3: eine Seitenansicht des Leitungsverbinders gemäß Schnittlinie III der Fig 2,
- Fig 4: die Seitenansicht einer weiteren Ausgestaltungsform des Leitungsverbinders.

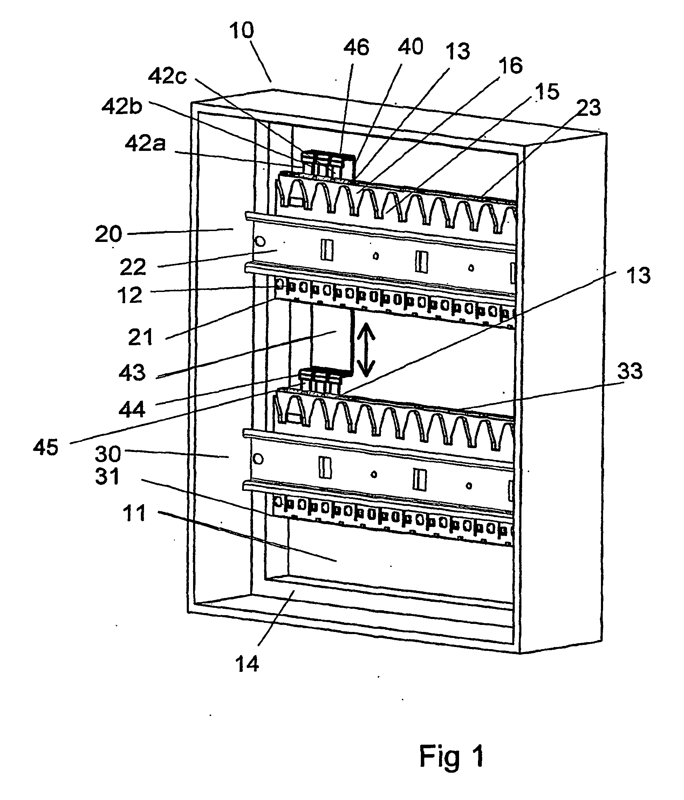

Es sei nun Bezug genommen auf die Fig. 1. Diese zeigt die perspektivische Darstellung eines Hausverteilerkastens 10 mit der darin eingebauten Verteilvorrichtung, bestehend aus einem ersten Basisgehäuse 20, einem zweiten Basisgehäuse 30 und einem elektrischen Leitungsverbinder 40. Der Hausverteilerkasten 10 besitzt eine Rückwand 11; an der der Rückwand 11 gegenüberliegenden Vorderseite ist er offen. Im rückwärtigen Bereich ist in den Hausverteilerkasten 10 ein Montagerahmen 14 eingesetzt, an dem das erste und zweite Basisgehäuse 20 und 30 quer zur Längserstreckungsrichtung des Hausverteilerkastens 10 befestigt sind.

In dem ersten Basisgehäuse 20 ist im unteren Teil eine erste Sammelschiene 21 untergebracht, die elektrische Kontaktierungen 12 zur Aufnahme der Kontaktstücke der Installationsgeräte aufweist. Im mittleren Bereich des ersten Basisgehäuses 20 ist eine erste Hutprofilschiene 22 angebracht, die zur Aufnahme der. Elektroinstallationsgeräte dient. In der im oberen Teil der der Rückwand 11 abgewandten Seitenfläche des ersten Basisgehäuses 20 sind dachförmige, konisch ausgebildete Ausformungen 15 und dazwischenliegende konische Ausnehmungen 16 angebracht, in welche entsprechende Vorsprünge in den Elektroinstallationsgeräten eingreifen können und durch welche die Elektroinstallationsgeräte geführt werden. An der oberen Schmalseite 23 des ersten Basisgehäuses 20 sind drei Steckbuchsen 13 vorgesehen, die mit den drei Anschlußkontaktstücken 42a, 42b und 42c des elektrischen Leitungsverbinders 40 in Eingriff bringbar sind.

Das zweite Basisgehäuse 30 ist identisch aufgebaut wie das erste Basisgehäuse, entsprechend bezeichnen die Bezugsziffem 31 die zweite Sammelschiene, 32 die zweite Hutprofilschiene, 33 die obere Schmalseite des zweiten Basisgehäuses. An der oberen Schmalseite 33 des zweiten Basisgehäuses 30 sind ebenfalls drei Steckbuchsen 13 vorgesehen. Das zweite Basisgehäuse 30 ist im Hausverteilerkasten 10 unterhalb des ersten Basisgehäuses 20 angebracht.

Der elektrische Leitungsverbinder 40 ist, wie in Fig. 1 ersichtlich, in dem Zwischenraum zwischen den beiden Basisgehäusen 20 und 30 und der Rückwand 11 des Hausverteilerkastens 10 angebracht. Er besteht aus einem Phasenschienenblock 43, welcher an seinen oberen und unteren Enden jeweils drei elektrisch voneinander isolierte L-förmige Anformungen 44 besitzt, deren als Anschlußkontaktstücke dienende freie Schenkel 45 in einer gemeinsamen Linie parallel zur Längserstreckung des Phasenschienenblocks 43 liegen und in die gleiche Richtung zeigen, wohingegen die festen Schenkel 46 quer zur Längserstreckung des Phasenschienenblocks verlaufen. Das Einführen der Anschlußkontaktstücke 42a, 42b und 42c in die Steckbuchsen 13 geschieht in vertikaler Richtung, wie durch den Richtungspfeil in Fig. 1 angegeben. Besonders vorteilhaft dabei ist, daß der elektrische Leitungsverbinder 40 auch nach erfolgter Vormontage des Hausverteilerkastens 10, d.h., nachdem die beiden Basisgehäuse 20 und 30 auf dem Montagerahmen 14 befestigt wurden, noch eingesetzt werden kann. Er wird dazu in eine solche Position gebracht, daß das obere Ende des Leitungsverbinders 40 ein wenig unterhalb der unteren Kante des ersten Basisgehäuses 20 sich befindet, dann leicht zur Rückwand 11 hin gekippt und so von unten nach oben in den Zwischenraum zwischen der Rückwand 11 und den Basisgehäusen 20 und 30 eingeführt wird, daß die am oberen Ende angeformten L-förmigen Anformungen 44 hinter dem ersten Basisgehäuse 20 hindurch gleiten und die am unteren Ende angeformten L-förmigen Anformungen vor dem zweiten Basisgehäuse 30 entlang geführt werden.

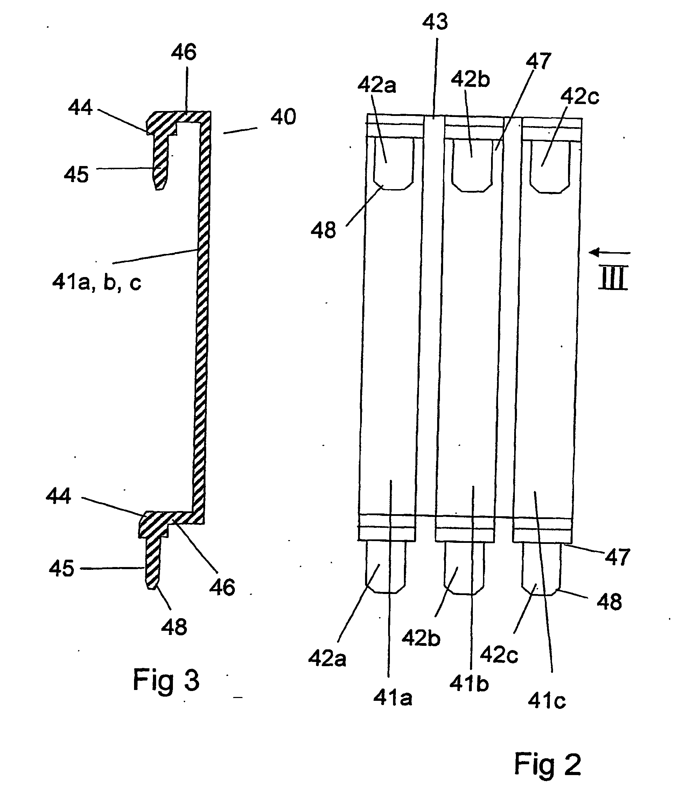

Eine bevorzugte Ausführungsform des elektrischen Leitungsverbinders 40 ist in Fig. 2 näher beschrieben. Er ist ausgeführt als Phasenschienenblock 43 mit drei gegeneinander isolierten und in ihrer Längserstreckungsrichtung parallel zueinander angeordneten Phasenschienen 41a, 41 b und 41c. Die Phasenschienen können in besonders vorteilhafter Ausgestaltung als Flachbandleiter ausgeführt sein. Die unteren freien Endkanten der Anschlußkontaktstücke 42a, 42b und 42c sind mit Einführschrägen 48 versehen, damit das Einführen in die Steckbuchsen 13 erleichtert wird. Zum Zwecke einer sicheren elektrischen Trennung sind die Anschlusskontaktstücke 42a, 42b und 42c gegeneinander noch durch Ausklinkungen 47 isoliert.

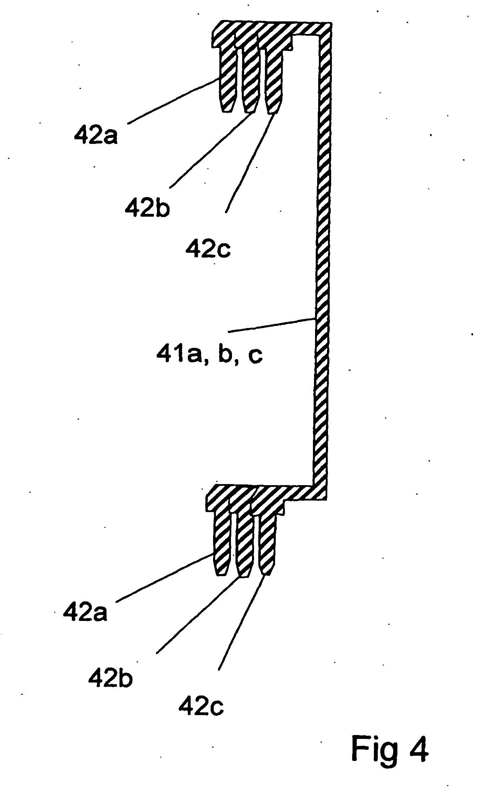

Fig. 3 zeigt eine Seitenansicht des Leitungsverbinders 40 gemäß der Pfeilrichtung III. Die freien Schenkel 45 der an den Phasenschienen oben und unten angebrachten L-förmigen Anformungen 44 und damit auch die Anschlußkontaktstücke 42a, 42b und 42c des Phasenschienenblocks liegen in einer gemeinsamen Ebene parallel zur Längserstreckung der Phasenschienen 41a, 41b, 41c.
Eine weitere Ausführungsform des Leitungsverbinders 40 ist in einer Seitenansicht in Fig. 4 dargestellt. Hierbei sind die zu den unterschiedlichen Phasenschienen 41a, 41b und 41c gehörenden Anschlußkontaktstücke 42a, 42b und 42c in Richtung quer zur Längserstreckung des Phasenschienenblocks 43 gegeneinander versetzt angeordnet. Bei dieser Ausführungsform sind dann auch die Steckbuchsen 13 an der oberen Schmalseite 23 des Basisgehäuses 20 in entsprechend in Ebenen parallel zur Rückwand 11 des Hausverteilerkastens 10 versetzt angeordnet, so daß die elektrische Kontaktierung durch vertikales Einführen der Anschlußkontaktstücke 42a, 42b und 42c in die Steckbuchsen 13 geschieht. Das Einführen des Leitungsverbinders 40 in den Zwischenraum zwischen Rückwand 11 und den ersten und zweiten Basisgehäusen 20 und 30 nach erfolgter Vormontage des Hausverteilerkastens 10 erfolgt in der oben bereits beschriebenen Art und Weise.

## Patentansprüche

1. In eine Installationsanlage, vorzugsweise einen Hausverteilerkasten (10) einbaubare Anschlußvorrichtung oder Verteilvorrichtung für elektrische Installationsgeräte, insbesondere für Leitungsschutzschalter, Energiemodule u. dgl., mit einem ersten Basisgehäuse (20), in dem wenigstens eine erste Sammelschiene (21) untergebracht und an dem eine erste Normprofiltragschiene, vorzugsweise eine Hutprofilschiehe (22), angebracht sind, und wenigstens einem weiteren zweiten Basisgehäuse (30), das in einer Ebene parallel zur Rückwand (11) des Hausverteilerkastens (10) unter oder über dem ersten Basisgehäuse (20) liegt, in dem wenigstens eine zweite Sammelschiene (31) untergebracht und an dem eine zweite Normprofiltragschiene, vorzugsweise eine Hutprofilschiene (32), angebracht sind, wobei die Installationsgeräte auf die Normprofiltragschienen aufrastbar und an den Installationsgeräten Anschlußkontaktstücke (42a,42b,42c) vorgesehen sind, die beim Aufschnappen mit der wenigstens einen ersten oder zweiten Sammelschiene (21,31) in dem Bereich zwischen der Unterkante des Basisgehäuses und der Normprofiltragschiene in elektrische Kontaktierung bringbar sind, sowie mit wenigstens einem elektrischen Leitungsverbinder (40), mit dem die wenigstens erste Sammelschiene (21) und die wenigstens zweite Sammelschiene (31) elektrisch leitend verbindbar sind, **dadurch gekennzeichnet, daß** der Leitungsverbinder (40) in dem Zwischenraum zwischen Basisgehause (20,30) und Rückwand (11) des Hausverteilerkastens (10) angeordnet ist, daß an beiden Enden des Leitungsverbinders (40) Anschlußkontaktstucke (42a,42b,42c) vorgesehen sind und daß an der Sammelschiene an geeigneter Stelle Gegenkontaktstücke vorgesehen sind, die mit den Anschlußkontaktsctücken (42a,42b,42c) des Leitungsverbinders (40) zusammenarbeiten.

2. Vorrichtung nach Anspruch 1, **dadurch gekennzeichnet, daß** der Leitungsverbinder (40) als Phasenschienenblock (43) mit einer oder mehreren gegeneinander isolierten und in ihrer Längserstreckungsrichtung parallel zueinander angeordneten Phasenschienen (41a,41b,41c) ausgebildet ist.

3. Vorrichtung nach Anspruch 2, **dadurch gekennzeichnet, daß** die an der Sammelschiene (21,31) vorgesehenen Gegenkontaktstücke als an der Oberkante des Basisgehäuses (20) angebrachte Steckbuchsen (13) ausgeführt sind.

4. Vorrichtung nach Anspruch 3, **dadurch gekennzeichnet, daß** jede Phasenschiene (41a,41b,41c) an ihrem oberen und unteren Ende L-förmige Anformungen (44) aufweisen deren als Anschlußkontaktstücke (42a,42b,42c) dienende freie Schenkel (45) in einer gemeinsamen Linie parallel zur Längserstreckung der Phasenschiene (41a,41b,41c) liegen und in die gleiche Richtung zeigen, und deren feste Schenkel quer zur Längserstreckung der Phasenschiene (41a,41b,41c) verlaufen.

5. Vorrichtung nach Anspruch 4, **dadurch gekennzeichnet, daß** die Anschlußkontaktstücke (42a,42b,42c) aller Phasenschienen (41a,41b,41c) in einer gemeinsamen Ebene parallel zur Längserstreckung der Phasenschienen liegen.

6. Vorrichtung nach Anspruch 4, **dadurch gekennzeichnet, daß** die zu unterschiedlichen Phasenschienen (41a,41b,41c) gehörenden Anschlußkontaktstücke (42a,42b,42c) in Richtung quer zur Längserstreckung der Phasenschiene gegeneinander versetzt angeordnet sind.

7. Vorrichtung nach Anspruch 4, **dadurch gekennzeichnet, daß** das Einführen der Anschlußstücke (42a,42b,42c) in die Gegenkontaktstücke in vertikaler Richtung erfolgt

8. Vorrichtung nach einem der vorherigen Ansprüche, **dadurch gekennzeichnet, daß** die freien Endkanten der Anschlußstücke (42a,42b,42c) zum Zwecke des leichteren Einführens in die Gegenkontaktstücke mit Einführschrägen (48) versehen sind.

9. Vorrichtung nach einem der vorherigen Ansprüche, **dadurch gekennzeichnet, daß** die Anschlußkontaktstucke (42a,42b,42c) zum wecke der sicheren elektrischen Trennung durch Ausklinkungen (47) voneinander isoiiert sind.

10. Vorrichtung nach einem der vorherigen Ansprüche, **dadurch gekennzeichnet, daß** die Phasenschienen (41a,41b,41c) als Flachbandleiter ausgebildet sind.

## Claims

1. Connecting device or distributing device, which can be installed in an installation system, preferably a domestic distribution box (10), for electrical installation equipment, in particular for circuit breakers, energy modules etc., having a first base housing (20), in which at least one first busbar (21) is accommodated and on which a first standard mounting rail, preferably a top-hat rail (22), is fitted, and at least one further second base housing (30) which lies on a plane parallel to the rear wall (11) of the domestic distribution box (10) below or above the first base housing (20) in which at least one second busbar (31) is accommodated and on which a second standard mounting rail, preferably a top-hat rail (32), is fitted, it being possible for the installation equipment to be latched onto the standard mounting rails, and connection contact pieces (42a, 42b, 42c) being provided on the installation equipment which, when snapped on, can be brought into electrical contact with the at least one first or second busbar (21, 31) in the region between the lower edge of.the base housing and the standard mounting rail, and having at least one electrical line connector (40), with which the at least first busbar (21) and the at least second busbar (31) can be electrically conductively connected, **characterized in that** the line connector (40) is arranged in the intermediate' space between the base housing (20, 30) and the rear wall (11) of the domestic distribution box (10), **in that** connection contact pieces (42a, 42b, 42c) are provided at both ends of the line connector (40), and **in that** opposing contact pieces are provided at a suitable point on the busbar, said opposing contact pieces interacting with the connection contact pieces (42a, 42b, 42c) of the line connector (40).

2. Device according to Claim 1, **characterized in that** the line connector (40) is in the form of a phase rail block (43) having one or more phase rails (41a, 41b, 41c) which are insulated from one another and are arranged parallel to one another in the direction of their longitudinal extent.

3. Device according to Claim 2, **characterized in that** the opposing contact pieces provided on the busbar (21, 31) are in the form of plug sockets (13) fitted on the upper edge of the base housing (20).

4. Device according to Claim 3, **characterized in that** each phase rail (41a, 41b, 41c) has L-shaped integrally formed sections (44) at its upper and lower end, the free limbs (45) of said integrally formed sections (44) acting as connection contact pieces (42a, 42b, 42c), lying on a common line parallel to the longitudinal extent of the phase rail (41a, 41b, 41c) and pointing in the same direction, and the fixed limbs of said integrally formed sections (44) extending transversely with respect to the longitudinal extent of the phase rail (41a, 41b, 41c).

5. Device according to Claim 4, **characterized in that** the connection contact pieces (42a, 42b, 42c) of all of the phase rails (41a, 41b, 41c) lie on a common plane parallel to the longitudinal extent of the phase rails.

6. Device according to Claim 4, **characterized in that** the connection contact pieces (42a, 42b, 42c) associated with different phase rails (41a, 41b, 41c) are arranged such that they are offset with respect to one another in a direction transverse with respect to the longitudinal extent of the phase rail.

7. Device according to Claim 4, **characterized in that** the connection pieces (42a, 42b, 42c) are inserted into the opposing contact pieces in the vertical direction.

8. Device according to one of the preceding claims, **characterized in that** the free end edges of the connection pieces (42a, 42b, 42c) are provided with insertion bevels (48) in order to make it easier to insert them in the opposing contact pieces.

9. Device according to one of the preceding claims, **characterized in that** the connection contact pieces (42a, 42b, 42c) are insulated from one another by means of notches (47) for reliable electrical isolation purposes.

10. Device according to one of the preceding claims, **characterized in that** the phase rails (41a, 41b, 41c) are in the form of flat ribbon conductors.

## Revendications

1. Dispositif de raccordement ou de distribution incorporable dans une installation, de préférence dans un coffret de distribution électrique (10) pour des appareils électriques d'installation, notamment pour des disjoncteurs de protection de ligne, des modules d'énergie ou similaires, qui comporte :
- un premier boîtier de base (20) dans lequel est monté au moins un premier rail collecteur (21) et sur lequel est fixé un premier rail porteur à profil normalisé, de préférence un rail profilé en chapeau (22),
- au moins un second boîtier de base (30) situé dans un plan parallèle à la face arrière du coffret de distribution (10), au-dessus ou en dessous du premier boîtier de base (20), dans lequel est monté au moins un second rail collecteur (31) et sur lequel est fixé un second rail porteur à profil normalisé, de préférence un rail profilé en chapeau (32),
- sur les rails porteurs à profil normalisé les appareils de l'installation peuvent être bloqués, et sur ces appareils sont prévus des contacts de raccordement (42a, 42b, 42c) qui, par fixation immédiate, peuvent être amenés en contact électrique avec au moins le premier ou le second rail collecteur (21, 31) dans la zone située entre le bord inférieur du boîtier de base et le rail porteur à profil normalisé,
- au moins un connecteur (40) par lequel peuvent être reliés électriquement au moins un premier rail collecteur (21) et au moins un second rail collecteur (31), ce dispositif présentant les caractéristiques suivantes :
le connecteur (40) est placé dans l'espace situé entre le boîtier de base (20, 30) et la paroi arrière (11) du coffret de distribution domestique (10), des contacts de raccordement (42a, 42b, 42c) sont prévus aux deux extrémités du connecteur (40) et
sur le rail collecteur sont prévus en des endroits appropriés des contacts opposés qui coopèrent avec les contacts de raccordement (42a, 42b, 42c) du connecteur (40).

2. Dispositif selon la revendication 1, **caractérisé en ce que** le connecteur (40) est un bloc de rails de phase (43) constitué d'un ou plusieurs rails de phase (41a, 41b, 41c) qui sont isolés les uns des autres et s'étendent longitudinalement parallèlement les uns aux autres.

3. Dispositif selon la revendication 2, **caractérisé en ce que** les contacts opposés prévus sur le rail collecteur (21, 31) sont des douilles enfichables (13) montées le long des bords supérieurs du boîtier de base (20).

4. Dispositif selon la revendication 3, **caractérisé en ce que** chaque rail de phase (41a, 41b, 41c) présente le long de ses bords supérieur et inférieur respectivement des parties (44) en forme de L dont les branches (45) servant de contacts de raccordement (42a, 42b, 42c) se trouvent dans un même plan parallèle au plan longitudinal des rails de phases (41a, 41b, 41c) en étant dirigées dans le même sens, tandis que les branches fixes sont perpendiculaires au plan longitudinal du rail de phase (41 a, 41b, 41c).

5. Dispositif selon la revendication 4, **caractérisé en ce que** les contacts de raccordement (42a, 42b, 42c) de tous les rails de phase (41a, 41c) se trouvent dans un plan commun parallèle au plan longitudinal des rails de phase.

6. Dispositif selon la revendication 4, **caractérisé en ce que**' les contacts de raccordement (42a, 42b, 42c) appartenant aux différents rails de phase (41a, 41b, 41c) sont décalés les uns par rapport aux autres dans la direction perpendiculaire au plan longitudinal du rail de phase.

7. Dispositif selon la revendication 4, **caractérisé en ce que** l'introduction des contacts de raccordement (42a, 42b, 42c) dans le contact opposé a lieu en direction verticale.

8. Dispositif selon une des revendications précédentes, **caractérisé en ce que** les arêtes d'extrémité libres des contacts de raccordement (42a, 42b, 42c), afin de faciliter leur introduction dans les contacts opposés, présentent des biseaux d'engagement.

9. Dispositif selon une des revendications précédentes, **caractérisé en ce que** les contacts de raccordement (42a, 42b, 42c), afin d'obtenir une séparation électrique sûre, sont isolés les uns des autres par des encoches (47).

10. Dispositif selon une des revendications précédentes, **caractérisé en ce que** les rails de phase (41a, 41b, 41c) sont constitués par des bandes conductrices plates.
